# EUROPEAN PATENT SPECIFICATION

(11) **EP 0 331 723 B1**
(45) Date of publication and mention of the grant of the patent: **07.01.1993**
(21) Application number: 88909151.8
(22) Date of filing: 21.09.1988
(51) Int. Cl.: F23G 5/00

(54) **Method and system for clean incineration of wastes**
Verfahren und Vorrichtung zur sauberen Verbrennung von Abfällen
Procédé et appareil d'incinération non-polluante de déchets

(30) Priority: 21.09.1987 US 98785; 17.03.1988 US 169595
(43) Date of publication of application: 13.09.1989
(73) Proprietor: PFEFFERLE, William C., Middletown, NJ 07748 (US)
(72) Inventor: PFEFFERLE, William C., Middletown, NJ 07748 (US)
(74) Representative: Boeters, Hans Dietrich, Dr.
(86) International application number: PCT/US88/03252
(87) International publication number: WO 89/02516

(56) References cited:
- US-A- 3 759 036
- US-A- 3 928 961
- US-A- 3 975 900
- US-A- 4 058 974
- US-A- 4 095 419
- US-A- 4 732 092

## Description

### BACKGROUND OF THE INVENTION

This invention relates to a method and system for the destruction of carbonaceous wastes as stated in the precharacterising portions of claim 1 and 7.

### Brief Description of the Prior Art

The disposal of solid and liquid hazardous/toxic wastes and fumes thereof is a pressing modern day problem. In particular, disposal of wastes such as domestic garbage is a particularly vexing problem, conventional incineration resulting in significant emissions of dioxins and other toxic partial oxidation products. Even with recycling and other efforts to reduce the amount of wastes produced, the amounts of such hazardous/toxic wastes to be disposed of will likely increase. Thus, the safe disposal of hazardous wastes, solid, liquid and gaseous, is a major problem yet to be satisfactorily dealt with.

Present technologies, typically based on incineration are not only costly but even more important are not completely reliable and typically do not achieve complete destruction, leading to proposals for burning at sea. Combustion of halogenated hydrocarbons is especially a problem since such compounds tend to inhibit combustion and reduce flame speeds. Thus, with highly toxic compounds such as polychlorinated biphenyl's (PCB's) or dioxins combustion can result in especially hazardous emissions. For certain highly toxic compounds, 99.9999 percent or better conversion efficiency is currently required by the Environmental Protection Agency (EPA). Solid wastes containing such compounds are a special problem. However, emissions of the products of incomplete combustion (PIC's) are currently unregulated and represent at least a potentially serious health problem inasmuch as PIC's emissions from conventional incinerators often consist of dioxins and other toxic compounds.

### Liquid Wastes

Conventional thermal incinerators for hazardous or toxic organic liquids, whether utilizing conventional flame combustors or fluidized bed combustors, require relatively long residence times to achieve acceptably high destruction efficiencies, typically on the order of one to five seconds. Such combustors typically require a high degree of turbulent backmixing to maintain combustion. It is believed that the long mean residence time required for high conversion stems from the fact that extensive backmixing results in a wide range of fluid residence times. Thus, even with a relatively long mean residence time some flow elements pass through very quickly and essentially uncombusted. Moreover, in the case of flame combustors, soot formation can entrap organics increasing burn-out time.

Flame combustors require substantial back mixing to achieve flame stability since laminar flame speeds are typically too low to permit high heat release rates without backmixing. In the fluidized bed systems combustion is stabilized by turbulence in both the gas and solid phases. The solid particles can create a dust pollution problem even with good filters since the finest dust particles are the greatest health hazard. Therefore, fluidized bed units are disadvantageous for liquid wastes and are best suited for handling sludges and shredded solids.

The relatively long residence times required by present technologies lead to a need for relatively large incinerators involving high capital costs and significant heat losses. The large capital investment required can be justified only by large waste volumes. Consequently on-site incinerators are economic only for the largest waste producers leading to the need for collection and transportation of wastes, often through areas of high population density, with the near certainty of spills and even major catastrophe. Moreover, although incinerators are designed for better than 99.99 percent conversions, flame-outs of conventional combustors is not uncommon and in incinerators could be disasterous. Even without upsets there has been concern about unacceptable emissions of dioxins from incinerators. This inherent unreliability of conventional incinerators has led to the building of special incinerator ships for burning wastes at sea.

In contrast to the foregoing, the present invention provides for stable combustion and 99.9999 percent or better conversion at plug flow residence times of less than 25 or 50 milliseconds. Thus, capital costs and heat losses are much lower for a given through-put.

### Solid Wastes

Conventional thermal incinerators for hazardous or toxic organic solids, whether utilizing conventional moving bed or fluidized bed combustors, require long average residence times to achieve acceptably high destruction efficiencies, leading to high capital and operating costs. In the first place, combustion of solids typically leads to pyrolysis, resulting in formation of partial oxidation products and pyrolysis volatiles (PIC's) which must then also be combusted. Secondly, gas phase combustion of the PIC's typically requires a high degree of turbulent backmixing with air to maintain combustion. As with liquid feeds, the long mean residence time required for high conversion stems from the fact that extensive backmixing results in a wide range of fluid residence times. Thus, even with a relatively long mean residence time some flow elements pass through very quickly and essentially uncombusted. Moreover, carbonization can entrap organics, as can soot formation from auxilliary fuel burners. Truly effective incineration requires the complete destruction not only of the original wastes but of the resulting PIC's and soot entrapped organics.

As has been noted, flame combustors require substantial backmixing to achieve flame stability since laminar flame speeds are typically too low to permit high heat release rates without backmixing. In the fluidized bed systems, which operate much like stirred tanks, combustion is stabilized primarily by backmixing and the gas residence time is typically much shorter than solids residence time. PIC's, which are formed throughout the stirred tank, can be emitted almost as soon as formed. In moving bed type incinerators, whether rotary kiln or moving grate, combustion may be stabilized by overfiring using a conventional flame combustor. With such kilns, residence time can be limited by the time required to burn out large solid objects. Therefore size reduction of the feed is often desireable even through such kilns, unlike fluidized bed incinerators, can be designed to handle almost any size object.

As with liquid wastes, the relatively long residence times required by present technologies lead to high capital costs and significant heat losses. Municipal incinerators, which typically must be located near population centers, face opposition because of the pollution emitted. Moreover, although incinerators are designed for better than 99.99 percent conversions, even without upsets there has been concern about unacceptable emissions of dioxins and other PIC's from incinerators. Coastal cities are simply dumping garbage at sea.

US-A-3 928 961 discloses a method and an apparatus of the first mentioned type for the catalytically supported thermal combustion of carbonaceous fuel comprising the adiabatic combustion of at least a portion of the fuel admixed with air in the presence of a solid oxidation catalyst at an operating temperature substantially above the instantaneous auto-ignition temperature of the fuel-air admixture, i.e. above 1200 K. This method has been developed for preventing formation of substantial amounts of nitrogen oxide. For this purpose use is made of catalytic combustion, wherein the fuel is catalytically burnt at relatively low temperatures. For avoiding the formation of significant amounts of NOₓ the temperature range of the adiabatic flame is limited to 2300 K. The obtainable emission levels are excellent. However, they are not sufficient for meeting the requirements of many regulations. In particular, this method and apparatus cannot be applied for reducing hydrocarbon emissions in a gas-turbine combustor nor for burning for example chlorinated materials or handling chlorinated dioxins or similar compounds, for which emission levels in the part per billion range are required these days.

The object of the present invention is to provide an incineration method and apparatus, which enable effective incineration and complete destruction not only of the original wastes but also of the resulting products of incomplete combustion and of soot entrapped organics.

This object is solved by the method and the apparatus of claims 1 and 7 resp.. Advantageous examples thereof are indicated in the dependent claims.

The invention is based on the recognition that by-passing of non-combusted wastes has to be eliminated in the combustion zone and that a step required for achieving this purpose is maintaining the necessary temperature everywhere in the combustion zone so that an essentially complete combustion of the hazardous waste material can be assured. Accordingly, the combustion zone comprising flow channels has been modified in that the outer peripheral flow channels of the catalyst structure are blocked and the interior flow channels are not blocked. By blocking the outer flow channels these channels form a thermal insulation zone and also prevent by-passing of any non-combusted material. The interior flow channels form the combustion zone, wherein a sustained and essentially complete combustion of the waste materials in an admixture with air is performed, maintaining a minimum flame temperature in all interior flow channels. There is no upper temperature limit, except that it cannot exceed a destructive temperature for the reactor walls. The substantially complete combustion of the waste material results in that no emissions of undesirable waste or waste components are made. Accordingly, emission levels in the part per billion range can be realized as are requested i.e. for chlorinated dioxins or similar compounds. Furthermore, hydrocarbon emissions in gas-turbine combusters can be reduced.

The method and the apparatus of the present invention allow a reliable, cost-effective, on-site destruction of gases and fumes as well as of solid carbonaceous wastes and hazardous/toxic waste liquids. Because of the high efficiency and smaller size as well as lower costs, an on-site combustion of most hazardous organics is economically feasible.

The present invention provides for the safe disposal of solid wastes by stable combustion of wastes with 99.99 percent or better destruction efficiency including PIC's. It has now been found that by passing the gaseous effluent of a conventional type solids incinerator through a plug flow combustor, not only can emissions of PIC's be practically eliminated but the size and and thus the cost of the incineration system reduced. Because the plug flow combustors of the present invention are so efficient, the solids incinerator need only gasify the wastes. Residence times in the plug flow combustor can be less than 50 milliseconds for 99.9999% conversion, ie. much lower than for a conventional secondary combustor. Accordingly, in a system of the present invention it is advantageous to size the solids incinerator primarily for gasification of solids rather than for complete combustion, thus reducing size and cost.

### Fumes

Unlike liquid or solid wastes, fumes must be controlled on-site. Obviously, prevention of escape of fumes into the air is a prerequisite of good plant design. Nevertheless, provision for isolation and abatement of escaped fumes is essential. Although conversion levels as low as 99 percent or less may often be acceptable in fume abatement of low concentration fumes, conversion levels of 99.99 percent or better are usually desireable. More important than the conversion level is the fume concentration in the effluent. Concentrations of about 100 parts per billion or less, and for some materials even as low as one to two parts per billion, are desireable. As with liquid wastes, incineration may be used to oxidize organics to carbon dioxide and water. The choice is between thermal incineration which requires heating and the fume-laden air to a high temperature, typically well in excess of 1100K, and incineration by catalytic oxidation, a process which is feasible even at temperatures as low as 600K and can achieve destruction efficiencies of about 99 percent or more. Either choice requires a substantial capital investment. However, fuel costs, and thus operating costs are much higher for thermal incineration because of the required high operating temperatures. Catalytic oxidation on the other hand is less reliable because of catalyst deterioration and the ever present danger of inadvertant catalyst poisoning at the modest operating temperatures employed. An alternate choice is abatement by adsorption, as for example the simple charcoal recirculating range hoods. Such units can be effective but are expensive to operate, requiring replacement or regeneration of the adsorbant prior to breakthrough.

The method of the present invention makes possible reliable, cost effective, on-site destruction of gases and fumes as well as of solid carbonaceous wastes and hazardous/toxic waste liquids.

### SUMMARY OF THE INVENTION

### Definition of Terms

The term "carbonaceous waste" as used herein refers not only to carbon containing compounds such as hydrocarbons, dioxins, alcohols, ketones, aldehydes, ethers, organic acids, halogenated forms of the foregoing organic compounds and the like but to any material containing or composed of organic matter, such as municipal garbage or hazardous organics contaminated earth. The waste may be gaseous, liquid or solid at normal temperature and pressure.

The terms "fume" and "fumes" in the present invention refers to admixture of organic vapors with air or inert gases in too low a concentration to produce a flame, and typically in concentrations as low as one to several hundred parts per million by volume. Although the invention is described herein in terms of air as the oxidant, it is well understood that oxygen is the required element to support combustion. The term "air" is used herein to refer not only to atmospheric air but to oxygen containing non-fuel components of admixtures, including water added to enhance combustion.

As used in the present invention, the terms "gasification" and "gasify" mean the conversion to gaseous form of at least a portion of the organic content of a carbonaceous waste whether by oxidation, pyrolysis, volatilization, or any combination thereof.

The term "instantaneous auto-ignition temperature" for a fuel-air admixture as used herein is defined to mean that temperature at which the auto-ignition lag of the fuel-air mixture entering the combustion zone is negligible relative to the residence time in the combustion zone of the mixture undergoing combustion.

The term "fuel" includes the carbonaceous wastes to be destroyed, including fumes, gasification products, and any supplemental fuel required to obtain fuel-air admixtures with sufficiently high adiabatic flame temperatures. With wastes of sufficient heating value the waste stream can be the sole fuel used.

The term "essentially complete combustion" is used to denote a level of conversion exceeding the requirements for disposal of the materials to be destroyed. Under U.S. 40 CFR 264.343, 99.99% destruction and removal efficiency (DRE) is specified for toxic materials. In addition, U.S. EPA waste codes F020-F028 specify a DRE of 99.9999% for chlorinated dioxins or similar compounds (U.S. Federal Register, January 14, 1985). However, the DRE requirement applies only to the original materials present. Emissions of PIC's are unregulated. For fumes the requirement may be stated in terms of concentration of the fume in the effluent, typically less than 0.1 ppm but often as low as one to five per billion. These conversion levels are well beyond those required for primary fuel combustion in boilers and gas turbines.

In the present invention, the "stoichiometric amount of air" means the amount of air required to provide sufficient oxygen for complete combustion of the fuel to carbon dioxide and water.

The term "plug flow" as used herein should be understood to mean flow systems with a narrow gas residence time distribution without significant backmixing in the plug flow combustion zone. In other words the minimum gas residence time is close to the mean gas residence time.

### Description of the Invention

In accordance with the present invention, hazardous waste streams are destroyed and the heating value recovered by combustion of an admixture of fuel and air in a plug flow reaction zone at a temperature in excess of 1350K and at a velocity in excess of the laminar flame velocity of the fuels used. The reaction zone wall temperature should be sufficiently high to substantially avoid quenching of combustion. By-passing of the combustion zone should be avoided. A known method of stabilizing plug flow combustion is by use of a catalyst as in the method of US-A-3,928,961. Other methods include plasma jet stabilization, thermal stabilization by contract with a hot wall or stabilization by heating at least a portion of the admixture of fuel and air to a temperature above or close to the instantaneous auto-ignition temperature by mixing with hot combustion products in a venturi mixing zone prior to the plug flow reaction zone. As noted above, at the instantaneous auto-ignition temperature, auto-ignition delay is negligible and combustion proceeds rapidly. Using a venturi to recycle hot combustion products is particularly effective with high water content fuels. For complete combustion of the fuel at least a stoichiometric amount of air is required. At least twice the stoichiometric amount of air is preferred. In gas turbine applications the excess air may be greater than 400 percent.

Also in accordance with the present invention, hazardous waste solids are destroyed and the heating value recovered by gasification followed by plug flow combustion of the resulting gases in admixture with air, at a temperature in excess of 1350K as just described. Typically, wastes are gasified by combustion in a solids incinerator resulting in pyrolysis and partial oxidation products being formed.

The catalytically stabilized thermal (CST) combustor of the aforementioned patent is especially well suited for the plug flow combustor of the present invention since it represents a unique approach to combustion that incorporates the best features of thermal flame combustors and heterogeneous catalytic surface oxidation systems. Moreover, even fuel-air mixtures well below the normal lean flammability limits are readily burned. In the catalytically stabilized thermal combustor, it has been shown that catalytic surface reactions generate heat and gas phase reactive intermediates which promote rapid gas phase combustion. The result is an efficient, high heat release rate combustor which is remarkably insensitive to flow surges. Using the methods of the present invention high conversion efficiencies can be reliably obtained and are essential for the effective destruction of toxic wastes. It has now been found that the better than 99.9999 percent conversion of combustible organics required for a PCB waste oil burning system can be obtained in a catalytically stabilized combustor provided that catalyst by-passing is minimized and that radial heat losses are controlled such that the coolest reaction channels are maintained above a predetermined temperature, typically about about 1300K and more preferrably above 1350K. This is to ensure that the actual flame temperature reached in these coolest channels is at least as high as 1350K. The adiabatic flame temperature of the incoming fuel-air admixture is maintained at a value sufficiently higher than 1350K to maintain the desired actual flame temperature. Similarly high conversions can be obtained with hot gas or plasma-jet stabilized and thermally stabilized plug flow reactor combustion systems provided the reactor internal wall surfaces are maintained at a sufficiently high temperature to avoid quenching of gas phase combustion at the wall. The adiabatic flame temperature of the incoming admixture of fuel and air preferrably is high enough that the actual flame temperature at completion of combustion is at least 1350K even near the combustor wall.

Because of the high conversion efficiency, smaller size and lower cost of incinerators of the present invention, on-site combustion of most hazardous organics is now economically feasible, even with chlorinated hydrocarbons. Moreover, incineration systems according to the present invention are well suited for powering gas turbines and thus for recovering energy in the form of work. Gas turbines employed with systems of the present invention for destruction of hazardous materials can power an electrical generator, providing a source of electrical power and thus reducing the cost of destroying hazardous wastes. Moreover fumes can make up part of the incinerator combustion air. In fume abatement applications, it is important that essentially none of the fumes by-pass the combustor. Therefore, it is advantageous to use a source of clean compressed air for turbine cooling air rather than part of the combustion air to avoid by-passing such fumes around the incineration zone. Alternately, an uncooled turbine or use of an alternate cooling fluid such as steam may be employed.

Inasmuch as wastes are often of varying indeterminate composition (and heat of combustion), particularly in the case of fuel-water emulsions, water soluble liquids containing water, and municipal wastes, it may be necessary for reliable operation to either burn the waste along with another fuel, which itself can be a hazardous waste, or to utilize a rapid response feedback control system which can automatically compensate for variations in the heating value of the waste liquids. The fuel-air admixtures of the present invention may be obtained in various ways. High heating value process fumes containing suitable concentrations of combustibles and oxygen may be used as supplied. With most fumes of organic vapors in air, admixtures of sufficient heating value are formed by forming an intimate admixture with additional fuel. In the case of liquid wastes or high heating value gaseous wastes, suitable intimate admixtures may be formed by injecting the waste stream into air. With especially toxic wastes such as highly chlorinated substances, it is advantageous to utilize fuel-air admixtures containing at least about 0.5 mole of water per mole of carbon to enhance combustion efficiency even further. With gas turbines employing combustors according to the present invention, suitable admixtures can be formed by feeding the fuel into the turbine compressor inlet along with the inlet air. This is especially advantageous for gaseous fuels such as high heating value gaseous wastes.

PCB contaminated hydrocarbon oils are readily combusted. However, although pure halogenated hydrocarbons can be burned, it is advantageous to burn such oils in combination with at least about 25 percent by weight of a hydrocarbon fuel to achieve more efficient combustion and to produce hydrochloric acid in the effluent rather than chlorine. Alternately, it is advantageous to introduce water, preferrably one more per mole of chlorine, into the fuel-air admixture to enhance combustion and as a source of hydrogen for conversion of chlorine to hydrogen chloride (hydrochloric acid). Hydrochloric acid and other inorganic contaminants present in the combustion effluent may be removed by either hot or cold scrubbing using conventional means.

In one version of the present invention, solid wastes are gasified and destroyed by combustion in a conventional solids incinerator and the gasification products passed to a plug flow combustion zone for essentially complete destruction of the products of incomplete combustion (PIC's) and unburned volatiles. Thus, a much shorter gas residence time is required in the solids incinerator, reducing its size and cost, and dangerous emissions of PIC's are significantly reduced or even eliminated. Inorganic contaminants in the combustion effluent may be removed by either hot or cold scrubbing using conventional means.

### BRIEF DESCRIPTION OF THE DRAWINGS

The present invention is further described in connection with the following drawings:
FIG. 1 is a schematic representation of a gas turbine system employing a recycle gas stabilized thermal combustor according to the method of the present invention.
FIG. 2 is a schematic representation of a gas turbine system employing a catalytically stabilized thermal combustor according to the the method of the present invention.
FIG. 3 is a schematic representation of a segmented catalyst bed combustor for use in the method of the present invention.

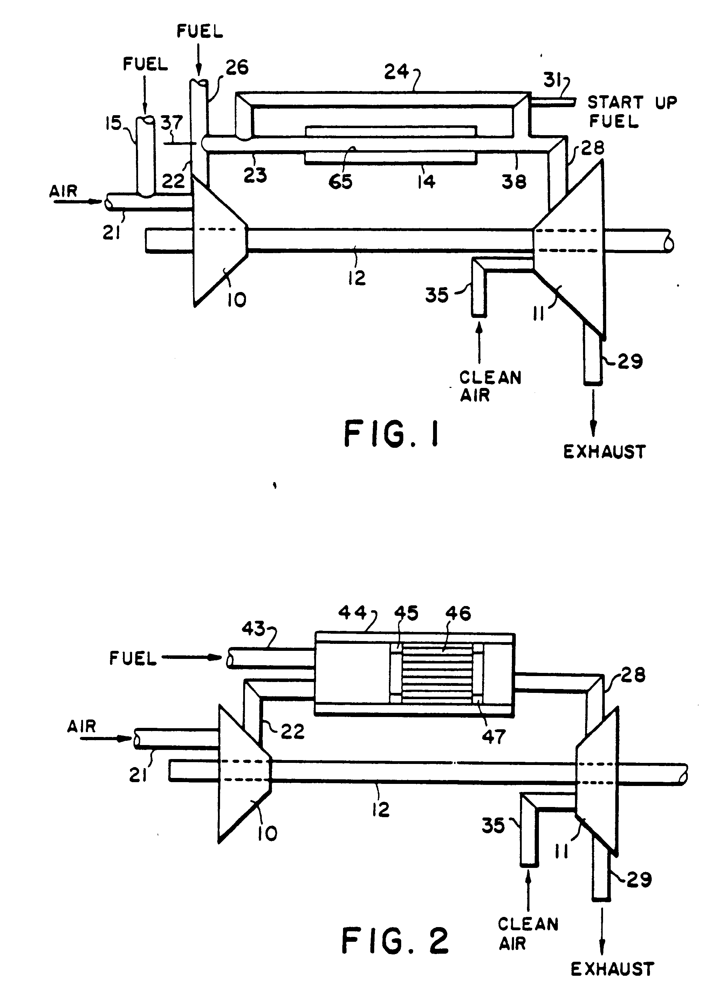

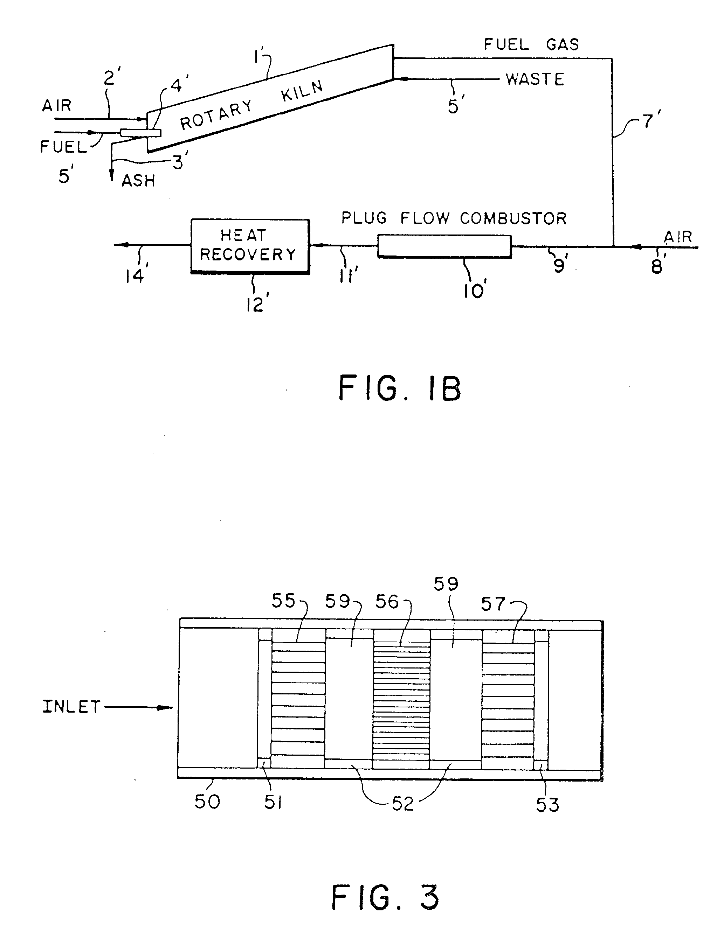

FIG. 1B is a schematic representation of a rotary kiln type solids waste incinerator employing a catalytically stabilized plug flow thermal combustor according to the method of the present invention.

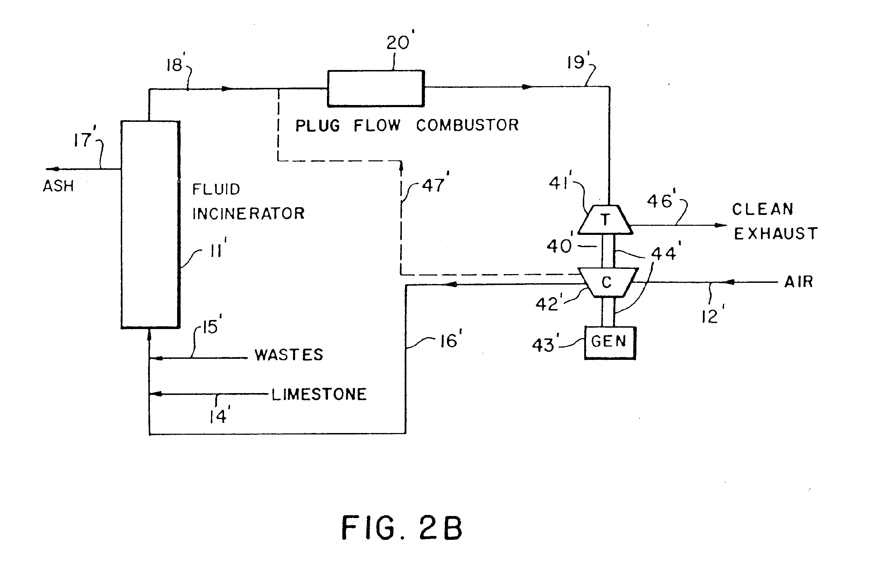

FIG. 2B is a schematic representation of a gas turbine solids waste incineration system suitable for destruction of chlorinated wasted and employing a fluidized bed incinerator combined with a plug flow combustor according to the the method of the present invention.

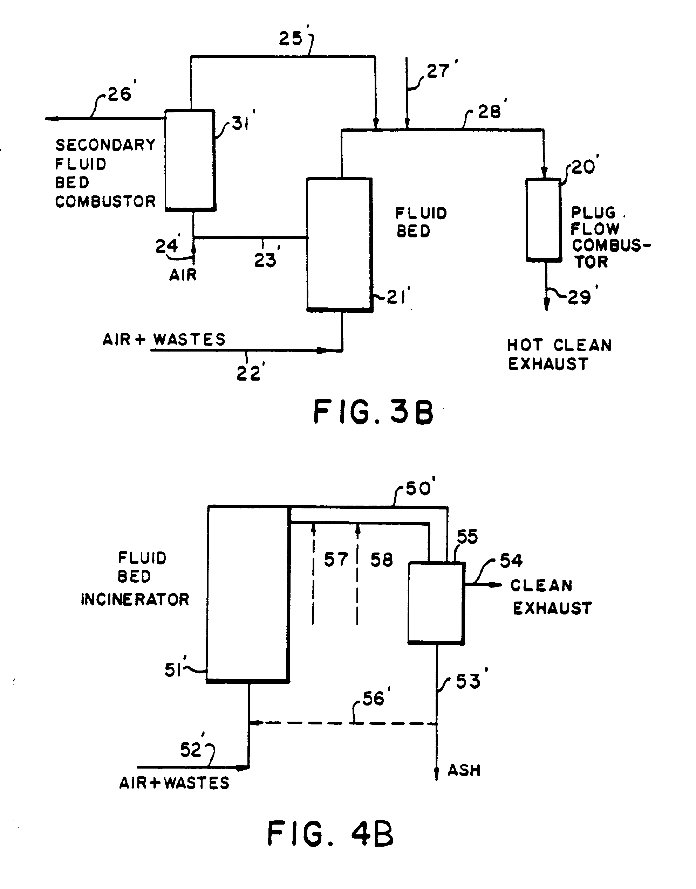

FIG. 3B is a schematic representation of a dual bed fluidized combustion system according to the present invention.
FIG. 4B is a schematic representation of a fluidized bed system employing a hot solids stabilized plug flow combustor.

### DETAILED DESCRIPTION OF THE INVENTION AND PREFERRED EMBODIMENTS

With reference to figure 1, power shaft 12 carries an air compressor 10 and power turbine 11. Power shaft 12 can be connected to any suitable power transmission system for use of the net power imparted to the shaft by turbine 11, as for example an electrical generator. For waste disposal operation, the turbine is advantageously operated at full load and the full electrical output fed into the electrical system with excess power not utilized fed back to the power grid. The structural operation and control of gas turbine systems are well known in the art and details in this regard are omitted from this description as they are unnecessary for explanation of the present invention. It is noted however that regenerative gas turbines generally have pressure ratios of about 3:1 to 6:1 and simple cycle gas turbines have a pressure ratio of at least about 4:1 and more typically at least about 10:1. Although the system of FIG. 1 is described in terms of simple cycle gas turbine to allow a more understandable drawing, a regenerative or recouperative gas turbine is advantageous in many applications.

Air, typically containing fumes, is fed to the compressor through duct 21 wherein fuel from line 15 is admixed with the entering air. Fuel may be in liquid or gaseous form and is admixed in an amount such that the adiabatic flame temperature of the fuel-air admixture entering the combustion zone is at least about 1600K and more preferably at least about 1700K. If a regenerative or recuperative gas turbine is used, the temperature of the fuel-air admixture may be high enough so that the adiabatic flame temperature of the fuel-air admixture can be as low as about 1400 or 1500K. Compressor 10 increases the pressure and the temperature of the entering admixture and assists vaporization of any liquid fuel.

Line 22 delivers the gaseous admixture from compressor 10 to venturi 23 wherein it is admixed with a sufficient quantity of combustion products delivered (recycled) via high temperature transfer line 24 such that the temperature of the resulting admixture is above the instantaneous autoignition temperature and then fed to plug flow combustor 14. Combustor 14 is thermally insulated and typically includes a ceramic insulating liner or coating 65. Clean hot combustion product effluent from plug flow thermal combustor 14 is delivered to power turbine 11 via line 28. A portion of the hot effluent from combustor 14 is drawn from line 28 by venturi 23 through line 24. Thermocouples 37 and 38 are positioned in lines 22 and 28 to measure the temperature of the gases leaving compressor 10 and combustor 14. The hot combustion products delivered to turbine 11 via line 28 are expanded in the usual manner to rotate the turbine and exhausted through line 29 thus imparting power to shaft 12 supplying not only the net output power but the power needed to drive compressor 10. If hydrochloric acid is present in the combustion gases it may be removed by hot scrubbing with a solid absorbant prior to expansion in the turbine.

At start-up, a conventional hydrocarbon fuel, is burned in burner-igniter 31 which operates until the temperature in combustor 14 is high enough to sustain efficient combustion. When the temperature of combustor 14 is high enough as indicated by thermocouple 38, fuel is admitted through line 26 and fuel flow increased replacing fuel to burner 31. During the start-up period no toxic fumes are utilized and no hazardous wastes are utilized as fuel. After stable operation is established, hazardous wastes may be gradually substituted for all or part of the fuel and toxic fumes admitted as part or all of the inlet air. Clean compressed cooling air is supplied via line 35 inasmuch as use of compressed gases from compressor 10 would result in fuel by-passing the combustion zone. If no significant fumes are present in the inlet air, injection of fuel through alternate fuel line 26 rather than through fuel line 15 will allow use of compressed air from compressor 10 in the manner usual with gas turbine systems.

In the embodiment of the invention shown in FIG. 2, combustion is stabilized by use of a combustion catalyst. Inlet air enters compressor 10 through duct 21 and compressed air is delivered from compressor 10 to combustor 44 by line 22. Fuel enters combustor 44 via line 43 and is admixed with air from line 22 in the entrance region of combustor 44 and passes through combustor catalyst 46 resulting in essentally complete combustion of the fuel. Typically, the entrance region is longer than monolithic combustor catalyst 46. The combustion products leaving combustor 44 via line 28 are delivered to turbine 11 and after expansion to rotate turbine 11, powering shaft 12 as in the system of FIG. 1, exit via line 29. The combustion catalysts of U.S. patent 3,928,961 are useful in the present invention and may be supported on either metal or ceramic honeycomb type monoliths. However, the system of FIG. 2 is described in terms of a metal honeycomb catalyst because of the greater ease of obtaining an excellent seal against unconverted fuel-air admixture by-passing the catalyst. Metal monolith combustion catalyst 46 is fastened, preferably by welding, to seal ring 45 such as to block off the flow channels in the cooler outer eight millimeters to prevent flow through these channels and thus by-passing of unreacted fuel. These blocked off channels help insulate the inner channels of catalyst 46 against heat loss. Seal ring 45 is in turn welded to the wall of combustor 44 to prevent by-passing of reactants around catalyst 46. Seal ring 45 is slightly larger in diameter than catalyst 46 so that catalyst 46 does not contact the combustor wall thus providing an additional gas film insulation layer. Retaining ring 47 assures that catalyst 46 cannot move downstream and incorporates spacers to hold the downstream end of catalyst 46 away from the wall of combustor 44. Line 35 is provided to provide clean cooling air for turbine 11 and is used when the inlet air contains fumes.

Figure 3 depicts a combustor employing a three segment catalyst bed. Honeycomb combustion catalysts 55, 56 and 57 are spaced apart by spacer rings 52. Spacer rings 52 and retainer rings 51 and 53 are welded to combustor can 50 to hold catalysts 55, 56 and 57 in place and to prevent bypassing of the catalysts. Mixing zones 59 assure that any unreacted fuel passing through an inactive channel will be combusted. Although a three or four segment bed is preferred, even a two segment catalyst bed offers improved performance over a single segment bed. Use of segmented beds is particularly important with ceramic honeycomb monolith catalysts because of the difficulty in assuring uniform catalyst coating in every flow channel. Metal monolith catalysts are preferred for single segment catalyst beds because the metal structure can be coated with catalyst before forming the honeycomb monolith. Similarly, ceramic monoliths formed from catalytically active ceramic also can avoid the presence of inactive flow channels.

With reference to figure 1B, waste is fed to rotary kiln 1′ via line 5′ and combustion air at the opposite end via line 2′. Ash exits via line 3′. Thus, air flows through the kiln counter-current to the flow of solids permitting more efficient burn-out of residual carbon from the ash and assuring that the ash is free of toxic volatiles. Fuel is supplied by line 6′ to burner 4′ for preheating the kiln prior to operation and to supply heat as needed to maintain kiln temperature during operation. Typically, burner 4′ is located well upstream of the point of ash removal. Although air in excess of the stoichiometric amount may be supplied to kiln 1′, it is often advantageous to supply only enough air to allow efficient burn-out of carbon from the ash and to produce a fuel-rich gas for combustion in plug flow combustor 10′. Fuel gas from kiln 1′ flows to plug flow combustor 10′ via lines 7′ and 9′. Fuel gas from line 7′ is mixed in line 9′ with air from line 8′ to produce a fuel-air mixture having an adiabatic flame temperature of at least about 1400K and containing an amount of air in excess of the stoichiometric amount needed for complete combustion of the fuel values therein to yield carbon dioxide and water. Combustion products exit combustor 10′ via line 11′ to heat recovery system 12′ and are vented via line 14′. Any counter-current flow solids combustor may be used in place of rotary kiln 1′, as for example a moving grate (or belt) combustor or kiln. Typically, rotary kiln 1′ includes means for removal of fly ash from the fuel gas entering line 7′.

In the system of figure 2B, gas turbine 40′, which consists of power turbine 41′, compressor 42′ and drive shaft 44′, is utilized to pressurize the system and to recover energy in the form of work. Air enters via line 12′ and is compressed in turbine compressor 42′. Compressed air from compressor 42′ is fed to fluid bed incinerator 11′ via line 16′. Wastes from line 15′ and limestone form line 14′ are fed to incinerator 11′ by injection into the compressed air in line 16′. Ash is removed via line 17′ from incinerator 11′ which includes gas/solids separation means. Gaseous combustion products pass from incinerator 11′ to plug flow combustor 20′ via line 18′. Optionally, compressed air from compressor 42′ not needed for operation of incinerator 11′ may be fed to line 18′ via line 47′. Combustion in plug flow combustor 20′ is thermally stabilized by the heat of combustion in incinerator 11′ which is operated such that the temperature of the gases entering plug flow combustor 20′ is no lower than about 1300K. Gases from plug flow combustor 20′ pass to power turbine 41′ via line 19′ and clean low pressure exhaust exits via line 46′. Power turbine 41′ drives turbine compressor 42′ and generator 43′ through drive shaft 44′. This system is especially advantageous for disposal of chlorinated wastes and the like since the presence of limestone in the fluid bed removes acid combustion products such as hydrochloric acid and the like.

Figure 3B depicts a dual fluidized bed incineration system which provides for more complete burn-out of carbon values in the solids for a given mean solids residence time. Backmixing of solids in a fluid bed combustor results in a wide range of solids residence time and thus in by-passing of unburned solids just as backmixing in a gas phase combustor results in by-passing of unburned vapors. Air and wastes enter fluid bed gasifier/combustor 21′ via line 22′. Typically, less than a stoichiometric amount of air is used to produce a fuel rich gaseous effluent which passes to plug flow combustor 10′ via line 28′. Inasmuch as gasification of wastes requires a shorter solids residence time than required for complete carbon burn-out, combustor 21′ can be relatively small. Combusted solids from combustor 21′ pass to secondary fluid bed combustor 31′ via line 23′. Combustion air from line 24′ is injected into line 23′ for completion of the combustion of the solids therein in combustor 31′. To assure maximum burn-out of carbon values with minimum mean residence time, combustor 31′ includes a plug flow reaction zone prior to a gas-solids separation section. Ash is drawn off via line 26′ and combustion gases via line 25′. Gases from line 25′ are mixed with the effluent from combustor 21′ in line 28′. As needed to provide the desired amount of excess air, air is added from line 27′ to the gases in line 28′ prior to passage to plug flow combustor 20′. Clean gases exit combustor 20′ via line 29′. This system is especially suited as a combustor for powering gas turbines in the manner of the system of figure 2B.

Figure 4B depicts another fluid bed incineration system employing a plug flow fluidized solids combustor. Air and wastes enter fluid bed incinerator 51′ via line 52′. Residence time of fluids in incinerator 51′ is typically less than 0.5 seconds, preferably less than about 0.1 seconds, and backmixing is sufficient to maintain combustion. Fluidized gas-solids effluent from incinerator 51′ enter plug flow combustor/transfer line 50′ where combustion continues to completion. Optionally, liquid wastes from line 58′ may be injected into combustor 50′ for combustion and additional air added via line 57′. Combustion products from combustor 50′ enter separator 55′. Clean exhaust gas exits through line 54′ and ash via line 53′. Hot ash may be recycled to line 52′ via line 56′ to heat the incoming air/waste stream and thus reduce the amount of backmixing required in incinerator 51′. As with the system of figure 2B, the incinerator of figure 4B may be operated at an elevated pressure in conjunction with a gas turbine energy recovery system.

### EXAMPLE I

In a combustion system as schematically depicted in FIG 1, a flow of 400 grams per second of an admixture of toxic wastes with air, at 700K and having an adiabaic flame temperature of 1725K, is admixed with hot combustion gases at a temperature of 1700K is sufficient quantity such that the resulting gas stream has a temperature of 1265K. This hot gas stream is then passed through a plug flow reaction tube of sufficient volume to provide a residence time of 20 milliseconds. Conversion of the toxic waste fuel is greater than 99.9999 percent. Heat is recovered from the hot combustion products by passing the combustion products to a steam boiler.

### EXAMPLE II

In a turbine system as schematically depicted in FIG. 2, 360 grams per second of air at 300K and containing 40 ppm by volume of benzene is compressed to a pressure of ten atmospheres and intimately admixed with sufficient propane such that the adiabatic flame temperature of the resulting vaporous admixture is 1525K. This resulting admixture is combusted in a plug flow metal monolith combustion catalyst in a combustor sized such that the residence time of the combusting gases in the catalyst zone is about twenty-five milliseconds. Conversion of benzene and the propane fuel is greater than 99.9999 percent. Hot combustion effluent is passed to a power turbine for recovery of power. Heat is recovered from the turbine exhaust. Clean compressed air is provided for turbine cooling.

### EXAMPLE III

In a combustion system as schematically depicted in FIG 1B, toxic wastes are fed to the upper end of an inclined rotary kiln at the rate of about ten tons per hours using a rotary screw feeder. Combustion air, in an amount equal to about 95% of the estimated stoichiometric amount is admitted to and ash removed from the opposite end of the kiln. To assure maximum removal of carbon values from the ash, a portion of the combustion air mixed with methane in the proper ratio to yield an admixture with an adiabatic flame temperature of about 1500K and the admixture combusted in a catalytically stabilized thermal (CST) combustor of my U.S. patent #3,928,961 prior entering the kiln. Sufficient methane is burned in the CST combustor to maintain the desired level of carbon burn-out from the ash exiting the kiln. Offgas from the kiln is mixed with sufficient air in excess of the stoichiometric amount needed for complete combustion such that the resulting admixture has an adiabatic flame temperature of about 1450K. This hot gas stream is then passed through a plug flow catalytically stabilized thermal combustor of sufficient size to provide a residence time of 20 milliseconds. Conversion of the toxic waste fuel is greater than 99.9999 percent. Heat is recovered from the hot combustion products by passing the combustion products to a steam boiler.

### EXAMPLE IV

Five tons per hour of pulverized solid wastes are slurried with oily wastes and pumped to a backmixed fluid bed incinerator/gasified together with air in about 130% of the stoichiometric amount for complete combustion. Limestone is also fed to the bed in an amount sufficient for removal of the acid gases generated. Overflow from the bed is passed through a plug flow combustor of sufficient volume such that the residence time of the gases in the plug flow combustor is 100 milliseconds when the incinerator is operating at design capacity. Effluent from the plug flow combustor is passed to a multi-stage cyclone separator for removal of ash and spent limestone from the hot gases. Sufficient supplementary fuel is added to the gaseous stream entering the plug flow combustor to maintain the adiabatic flame temperature of the gaseous stream at a value of at least 1350K. Advantageously, the air flow to the incinerator is pressurized by a gas turbine compressor driven by the clean incinerator off-gases.

### EXAMPLE V

Two tons per hour of gasoline contaminated soil is fed to an externally heated kiln to heat the soil passing through the kiln to a temperature of about 400K. A flow of air is fed into the kiln counter-current to the flow of the contaminated soil in an amount sufficient to strip the gasoline from the soil. Gasoline laden air leaving the kiln is fed to the air inlet of a gas turbine and after compression is mixed with sufficient additional fuel to maintain the adiabatic flame temperature of the resulting admixture at a temperature of about 1550K. The admixture is passed into a catalytically stabilized thermal combustor and combusted. The clean combustion gases drive the turbine, recovering combustion energy in the form of useful power.

## Claims

1. A thermal combustion method for the destruction of carbonaceous wastes, comprising
- forming an intimate admixture of said wastes and air, the admixture containing at least a stoichiometric amount of air for substantially complete combustion,
- passing the admixture to a plug flow combustion zone,
- effecting catalytically supported, sustained combustion of the admixture under essentially adiabatic conditions to form a heated combustion effluent, the admixture having an adiabatic flame temperature such that actual flame temperature in the combustion zone is greater than about 1350 K to destroy hazardous wastes,
**characterised** in that
- the combustion is effected only in the interior flow channels of the combustion zone,
- whereas flow through the outer flow channels is blocked and thus by-passing of unreacted fuel therethrough is prevented.

2. The method of claim 1 wherein combustion is stabilized by mixing of the fuel-air admixture with hot combustion products prior to passage to the plug flow combustion zone.

3. The method of claim 1 or 2 wherein the carbonaceous wastes are gasified before forming an intimate mixture of said wastes and air.

4. The method of claim 3 wherein the gasification of the wastes comprises thermal oxidation of the wastes.

5. The method of claim 3 wherein the gasification of the wastes comprises pyrolysis of the wastes.

6. Application of the method of any of claims 1 to 4 to operating a gas turbine.

7. A system for the destruction of carbonaceous wastes, comprising
- means (10, 22, 43) for producing an intimate admixture of said wastes and air,
- means (44, 46) for maintaining the adiabatic flame temperature of the admixture above a predetermined value,
- plug flow combustion means (46),
**characterised** in that
- the plug flow combustion means (46) comprise outer peripheral flow channels and interior flow channels,
- the plug flow combustion means (46) is fastened to a seal ring (45) such as to block off the outer flow channels of the plug flow combustion means and
- the seal ring (45) is welded to the wall of the means (44) for maintaining the adiabatic flame temperature to prevent by-passing of reactants around the plug combustion means (46).

8. The system of claim 7 wherein the seal ring (45) is slightly larger in diameter than the plug combustion means (46), the plug combustion means not contacting the wall of the means (44) for maintaining the adiabatic flame temperature.

9. The system of claim 7 or 8, further comprising means (1′) for gasifying the wastes.

10. The system of claim 9 wherein the means (1′) for gasifying the wastes is a counter-current flow solids combustor, in particular a rotary kiln.

## Patentansprüche

1. Wärmeverbrennungsverfahren zum Abbau von kohlenstoffhaltigem Abfall, bei dem man
- eine innige Vermischung des Abfalls mit Luft vorsieht, wobei die Vermischung mindestens eine stöchiometrische Menge Luft für eine praktisch vollständige Verbrennung enthält,
- die Vermischung durch eine Plug-Flow- bzw. Gleichströmungsverbrennungszone führt,
- eine katalytisch gestützte anhaltende Verbrennung der Vermischung unter im wesentlichen adiabatischen Bedingungen durchführt und einen erhitzten Verbrennungsausfluß erzeugt, wobei die Vermischung eine adiabatische Flammentemperatur derart besitzt, daß die tatsächliche Flammentemperatur in der Verbrennungszone größer als etwa 1350 °K ist, und gefährlichen Abfall zerstört, dadurch ***gekennzeichnet,*** daß man
- die Verbrennung nur in den inneren Strömungskanälen der Verbrennungszone durchführt,
- während die Strömung durch die äußeren Strömungskanäle blockiert und dadurch ein Vorbeiströmen von unreagiertem Brennmaterial verhindert wird.

2. Verfahren nach Anspruch 1, bei dem die Verbrennung dadurch stabilisiert wird, daß man die Brennmaterial/Luft-Vermischung mit heißen Verbrennungsprodukten vor dem Durchleiten durch die Gleichströmungsverbrennungszone vermischt.

3. Verfahren nach Anspruch 1 oder 2, bei dem der kohlenstoffhaltige Abfall vergast wird, bevor man eine innige Mischung der Abfalls mit Luft bildet.

4. Verfahren nach Anspruch 3, bei dem die Vergasung des Abfalls eine Hitzeoxidation des Abfalls umfaßt.

5. Verfahren nach Anspruch 3, bei dem die Vergasung des Abfalls eine Pyrolyse des Abfalls umfaßt.

6. Anwendung des Verfahrens nach einem der Ansprüche 1 bis 3 zum Betrieben von Gasturbinen.

7. System zum abbau von kohlenstoffhaltigen Abfällen, umfassend:
- Mittel (10, 22, 43) zur Ausbildung einer innigen Vermischung des Abfalls mit Luft,
- Mittel (44, 46) zum Beibehalten einer adiabatischen Flammentemperatur der Vermischung oberhalb eines vorgegebenene Wertes,
- Plug-Flow bzw. Gleichströmungsverbrennungsmittel (46), dadurch ***gekennzeichnet,*** daß
- die Gleichströmungsverbrennungsmittel (46) äußere periphere Strömungskanäle und innere Strömungskanäle umfassen,
- die Gleichströmungsverbrennungsmittel (46) an einen Dichtungsring (45) derart befestigt sind, daß die äußeren Strömungskanäle der Gleichströmungsverbrennungsmittel blockiert werden und
- Daß der Dischtungsring (45) an die Wandung der Mittel (44) für die Beibehaltung der adiabatischen Flammentemperatur angeschweißt ist, um ein Vorbeiströmen von Reaktanten rund um die Gleichströmungsverbrennungsmittel (46) zu verhindern.

8. System nach Anspruch 7, bei dem der Dichtungsring (45) einen etwas größeren Durchmesser hat als die Gleichströmungsverbrennungsmittel (46) aufweist, wobei die Gleichströmungsverbrennungsmittel die Wandung der Mittel (44) für die Beibehaltung der adiabatischen Flammentemperatur nicht berühren.

9. System nach Anspruch 7 oder 8, das ferner Mittel (1′) zum Vergasen der Abfälle umfaßt.

10. System nach Anspruch 9, bei dem die Mittel (1′) zum Vergasen der Abfälle ein Gegenstrom-Feststoffbrenner sind, insbesondere ein Drehofen.

## Revendications

1. Procédé de combustion thermique pour détruire des déchets carbonés, comprenant les opérations consistant à :
- former un mélange intime de ces déchets et d'air, le mélange contenant au moins une quantité stoechiométrique d'air pour mener la combustion sensiblement à son terme,
- faire passer le mélange dans une zone de combustion à écoulement obstrué et à plug flow, respectivement,
- effectuer une combustion du mélange soutenue et supportée par voie catalytique dans des conditions essentiellement adiabatiques de façon à former un effluent de combustion chaud, le mélange ayant une température de flamme adiabatique telle que la température de flamme réelle dans la zone de combustion soit supérieure à environ 1 350 K de manière à détruire les déchets toxiques,
caractérisé en ce que :
- l'on effectue la combustion uniquement dans les canaux d'écoulement intérieurs de la zone de combustion,
- tandis que l'on empêche l'écoulement dans les canaux d'écoulement extérieurs pour ainsi y éviter le passage en dérivation de combustible n'ayant pas réagi.

2. Procédé selon la revendication 1, dans lequel on stabilise la combustion en mélangeant au mélange combustible-air des produits de combustion chauds, avant le passage dans la zone de combustion à écoulements obstrué.

3. Procédé selon la revendication 1 ou 2, dans lequel on gazéifie les déchets carbonés avant de former un mélange intime de ces déchets et d'air.

4. Procédé selon la revendication 3, dans lequel la gazéfication des déchets comprend une oxydation thermique des déchets.

5. Procédé selon la revendication 3, dans lequel la gazéfication des déchets comprend une pyrolyse des déchets.

6. Application du procédé selon d'une des revendications 1 à 4 à l'entraînement d'une turbine à gaz.

7. Installation pour détruire des déchets carbonés, comprenant :
- des moyens (10, 22, 43) pour réaliser un mélange intime desdits déchets et d'air,
- des moyens (44, 46) pour maintenir la température de flamme adiabatique du mélange au-dessus d'une valeur prédéterminée,
- des moyens de combustion (46) à écoulement obstrué et à plug flow, respectivement, caractérisées en ce que :
- les moyens de combustion (46) à écoulement obstrué comprennent des canaux d'écoulement extérieurs en périphérie et des canaux d'écoulement intérieurs,
- les moyens de combustion (46) à écoulement obstrué sont fixés à un joint d'étanchéité annulaire (45) qui obstrue les canaux d'écoulement extérieurs des moyens de combustion à écoulement obstrué et,
- le joint d'étanchéité annulaire (45) est soudé à la paroi des moyens (44) destinés à maintenir la température de flamme adiabatique, afin d'empêcher le passage de réactifs autour des moyens de combustion (46) à écoulement obstrué.

8. Installation selon la revendication 7, dans laquelle le joint d'étanchéité annulaire (45) est légèrement plus grand en diamètre que les moyens de combustion (46) à écoulement obstrué, ceux-ci n'étant pas en contact avec la paroi des moyens (44) destinés à maintenir la température de flamme adiabatique.

9. Installation selon la revendication 7 ou 8, comprenant en outre un moyen (1′) pour gazéifier les déchets.

10. Installation selon la revendication 9, dans laquelle le moyen (1′) pour gazéifier les déchets est un appareil de combustion de solides à contre-courant, en particulier un four rotatif.
